Europäisches Patentamt

European Patent Office

Office européen des brevets

(11) Publication number: **0 293 487**

**A1**

(12) # EUROPEAN PATENT APPLICATION

published in accordance with Art. 158(3) EPC

(21) Application number: **87907816.0**

(22) Date of filing: **26.11.87**

Data of the international application taken as a basis:

(86) International application number:
**PCT/JP87/00912**

(87) International publication number:
**WO88/04002 (02.06.88 88/12)**

(51) Int. Cl.³: **F 16 H 55/36**
**F 16 H 7/24, F 16 H 57/02**

(30) Priority: **26.11.86 JP 281172/86**
**17.01.87 JP 8478/87**
**28.08.87 JP 214775/87**

(43) Date of publication of application:
**07.12.88 Bulletin 88/49**

(84) Designated Contracting States:
**AT BE CH DE FR GB IT LI LU NL SE**

(71) Applicant: **TOKYO JIDO KIKO KABUSHIKI KAISHA**
**8-33, Takanawa 4-chome**
**Minato-ku, Tokyo 108(JP)**

(72) Inventor: **ONOGI, Kenkichi**
**20-8, Okusawa 6-chome Setagaya-ku**
**Tokyo 158(JP)**

(74) Representative: **Coxon, Philip**
**Eric Potter & Clarkson 14 Oxford Street**
**Nottingham NG1 5BP(GB)**

(54) **BELT TRANSMISSION.**

(57) A modularized belt transmission contained unitarily in its entirety in a single housing (30), in which the center (C) of rotation of a pulley (10), which is mounted on input and/or output rotary shaft (11, 12) and which can be made eccentric with respect to the rotary shaft (11, 12), and the axis (0) of the rotary shaft (11, 22) are maintained in alignment with each other normally, and out of alignment during a belt replacement operation to thereby enable a belt (20) to be replaced with the distance between the input and output shafts (11, 22) kept invariable.

FIG. 1A

FIG. 2

DESCRIPTION

BELT TRANSMISSION

Technical Field

This invention relates to a belt transmission system in which a belt used for single step power transmission between an input and an output shafts can be replaced without shifiting any of input or output shafts, and more particularly to a unitized or modularized belt transmission system capable of being employed between a driving and a driven shafts in a manner just like a reduction gear unit and making the most of advantages of belt transmission.

Background Art

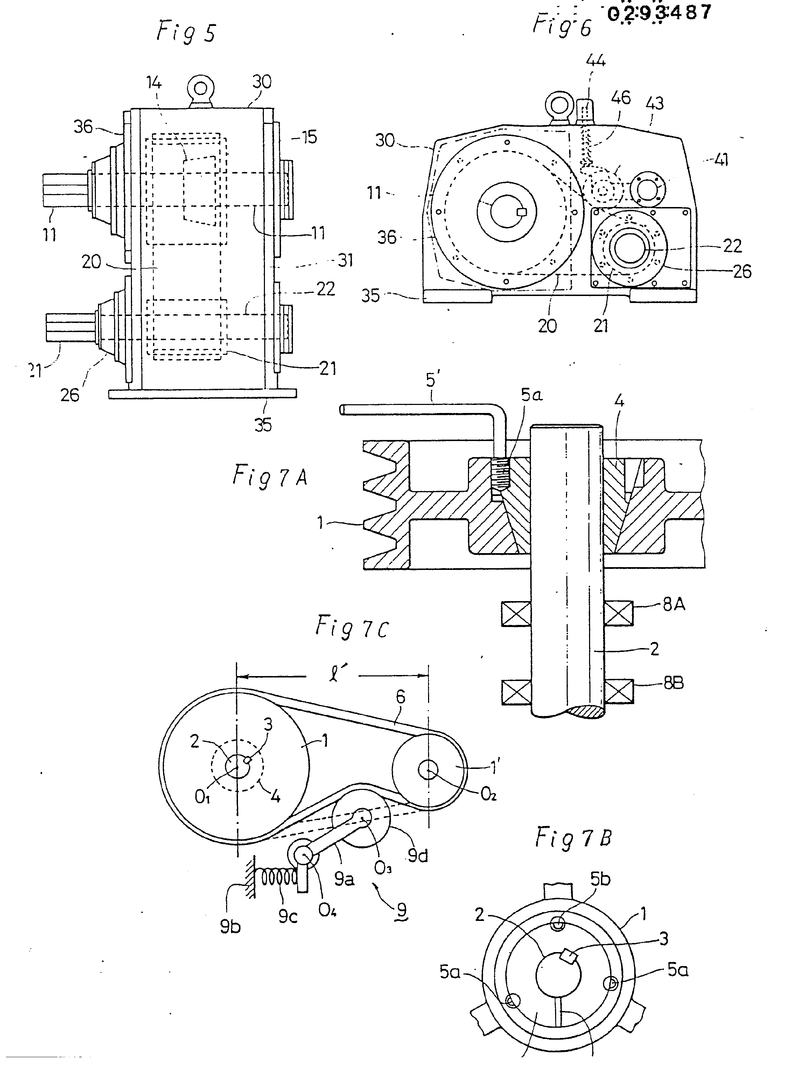

A conventional belt transmission is shown in Figures 7A, 7B and 7C in which Figure 7A and Figure 7B illustrate a pulley employed in the belt transmission in a fragmentary sectional view and in a plan view, respectively, and Figure 7C illustrates an overall belt transmission system in plan view. In these Figures, a pulley wheel 1 is fixed to a rotatable shaft 2 by means of a bushing 4 which is received in a central bore of the wheel 1 and attached to the shaft 2 via a coupling member 3 such as a key shown in Figure 7B. Screwing up set screws 5a arranged between the wheel 1 and bushing 4 causes the bushing 4 to be press fitted between the wheel 1 and the shaft 2 to thereby engage tightly thereagainst. Reference character 5' in Figure 7A indicates a wrench to be inserted in a hexagon socket (not shown) of the screws 5a, and characters 8A and 8B indicate bearings for supporting the shaft 2 in a cantilever fashion. A belt 6 is wrapped around the wheel 1 and also around another wheel such as driving pulley 1' fixed to an input shaft $0_2$ as shown in Figure 7C. In this Figure, character 9 indicates a tension adjuster for tensionning the belt 6, comprising an arm 9a, a spring 9c supported by a support frame 9b and a tension roller 9d supported by the arm 9a for biasing the belt 6 with back pressure.

The belt transmission system of this type has, in general,

- 1 -

a heavy load such as an agitating machine, a compressor or a blowing fan connected to its output shaft $O_1$ and a drive means of relatively small mass and lightweight such as an induction motor connected to its input shaft $O_2$, which will be more susceptible to be shifted if shifing of any shafts be required. Such shifting will be required in such a case that the tension belt 6 is to be refreshed or some parts of transmission system should be repaired. To this end, a movable support deck (not shown) has been specifically designed for mounting a particular type of electric motor and affixed to the transmission system near its input shaft to permit easy shifting of the shaft together with the motor.

Belt replacement opration in the system shown in Figure 7C is carried out in such a manner that the spring 9c is first removed or inactivated and then the arm 9a is rotated clockwise around its pivot axis $O_4$ thereby to remove back pressure by tension roller 9d from the belt 6. If there is a large distance $\ell'$ between output and input shafts and tension roller 9d can be moved through a relatively long stroke, the belt 6 will only be loosened from the pulley wheels and be able to do sliding movement around the wheels, and yet it cannot be detached therefrom due to its thickness captured in grooves of the wheel 1. To detach the belt 6 from the pulleys, any one of the shafts, e.g. input shaft $O_2$ has to be shifted towards output shaft $O_1$. Where the distance $\ell'$ is small at the outset and the tension roller 9d can be swung only by a small stroke, the belt 6 will remain pressed against the pulley wheel 1 even after loosening the tension roller 9d. In any event, input shaft $O_2$ must be necessarily shifted for belt replacement operation.

Other disadvantages have also been found with respect to the transmission system having large distance between input and output shafts. Usually, many of actual transmission systems having large distance between the shafts, being void of the tension adjustment mechanism as shown, which might be deemed desirable from a point of view of installation requirements in one aspect, are suffered from the problems caused by belt elongation, and maintenance services are required to adjust the belt tension every a few weeks, necessitating customer engineers staying always nearby.

If tension adjustment mechanism be affixed to the system, the necessity for shifting any one of input or output shafts $O_2$, $O_1$ for belt replacement or repairing will not be solved so that the belt transmission system of the prior art type must be constructed in such a way that any one of the load or the drive can be moved on the system. For this reason, the entire transmission system cannot be made in a compact size and, hence, it is virtually impossible to construct the transmission system contained in a sealed or semi-sealed housing. To achieve, for example, at least semi-sealed condition for the transmission system, it will be necessary to mount the driving motor and the driven apparatus (load) integrally with transmitting members (input and output shafts, pulleys and belts) so as to render only driving motor shiftable relative to the load, and to cover the transmitting members with a protective envelope such as sheet metal or reinforced plastic sheet for preventing danger. However, cumbersome problems arise from the fact that a structure for mounting movably the driving motor on the transmission system should be designed and fabricated individually and correspondingly to a particular type of the driven apparatus, and such movable sutructures are essentially not suitable for large and heavy driving motors needed for high output power load.

Thus, it has been considered impractical to have a belt transmission system uniterily accommodated in a single sealed housing which, as a unit like the reduction gear unit, can be installed between input and output shafts without shifting any of the both shafts.  Still less, it could not be expected to mount large and heavy driving motor on such housing enclosing the transmission system.

### Disclosre of the Invention

This invention provides a unitized or modularized belt transmission system which enables belt replacement to be done without shifting any of input and output shafts and which is contained unitarily in a single sealed housing so that the distance between input and output shafts and the length of the belt wrapped therearound can be shortened so as to solve as much problems caused by belt elongation as possible.

Particularly, this invention contemplates an improvement in the belt transmission system having belt means wrapped around the driving and driven pulleys fixed respectively to the input and output shafts, in which at least one of said pulleys is constructed as an eccentrically shiftable pulley with its rotational axis being aligned with the axis of the shaft supporting the same during ordinary operation, but for belt replacement said pulley will be shifted eccentrically with respect to the support shaft, and in which the input and output shafts with the distance therebetween set invariably are securely fixed to a single housing composed of a main body and a cap member which contains entire transmission parts including pulleys and belts.

Brief Description of Drawings

Figure 1A represents a first embodiment of a belt transmission system of the invention in a partially sectional front elevatonal view taken substantially along the line A-A in Figure 1C;

Figure 1B shows a sectional plan view taken substantially along the line B-B in Figure 1A;

Figure 1C shows a plan view of the transmission system of the invention with an electric motor removed;

Figure 1D represents an eccentrically shiftable pulley employed in the transmission unit of the invention in a sectional view;

Figure 1E shows a plan view of the pulley of Figure 1D;

Figure 1F is for explanation of belt replacement procedures utilizing the eccentrically shiftable pulley of the invention in a state before shifting (F-1) and after shifting (F-2);

Figure 1G represents a perspective view showing a tension adjuster mechanism employed in the system shown in Figure 1B;

- 4 -

Figure 2 represents a second embodiment of the belt transmission system of the invention in a partially sectional front view;

Figure 3 represents a third embodiment of the invention;

Figure 4A represents in a partial sectional view taken substantially along the line A-A in Figure 4B a fourth embodiment of the invention in which a rotatable shaft supporting the shiftable pulley is journalled at its both ends;

Figure 4B shows a partial plan view of the fourth embodiment;

Figure 4C illustrates a procedure for belt replacement in the fourth embodiment;

Figure 4D shows in a sectional view a modified form of the shiftable pulley for which the supporting shaft is juournalled at its both ends;

Figure 5 shows in elevation another embodiment of modularized belt transmission unit of the invention;

Figure 6 shows further embodiment of the invention in elevation;

Figures 7A through 7C illustrate the belt transmission of the prior art in which Figures 7A and 7B show a pulley in partial sectional view and plan view recpectively, and Figure 7C illustrates the belt transmission utlizing such pulley.

### Best Mode For Carrying Out The Invention

Referring now to the drawings, several embodiments of the invention will be described specifically.

#### First embodiment

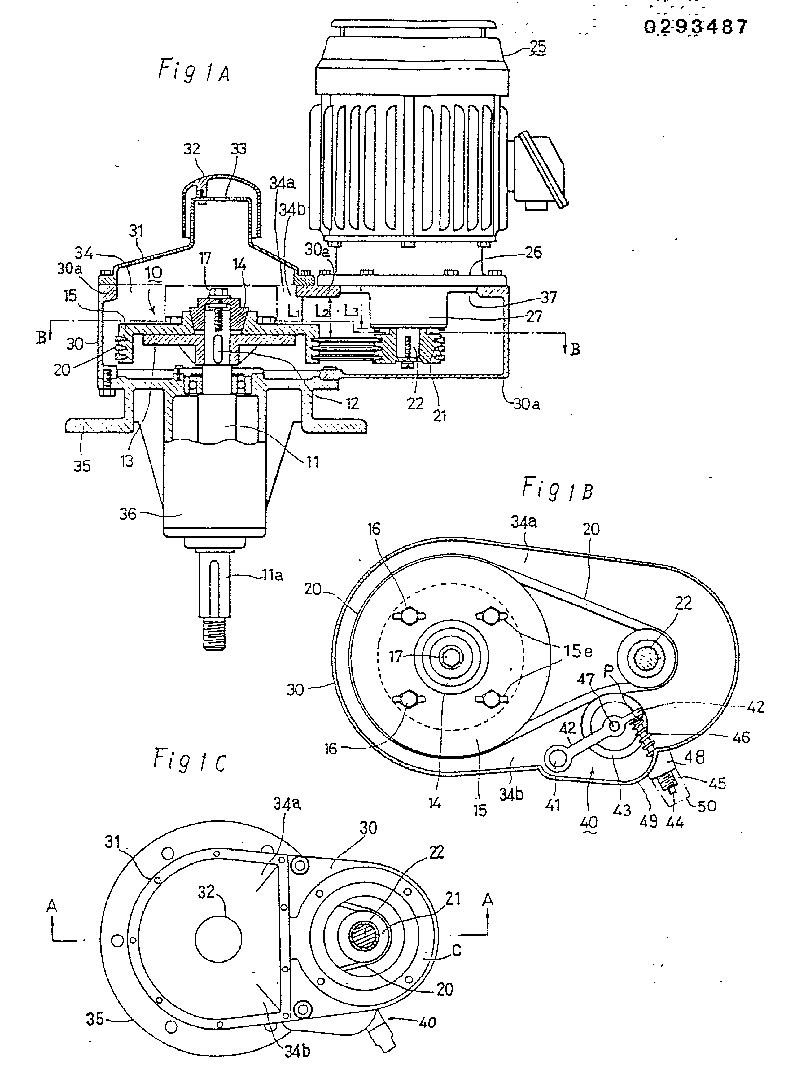

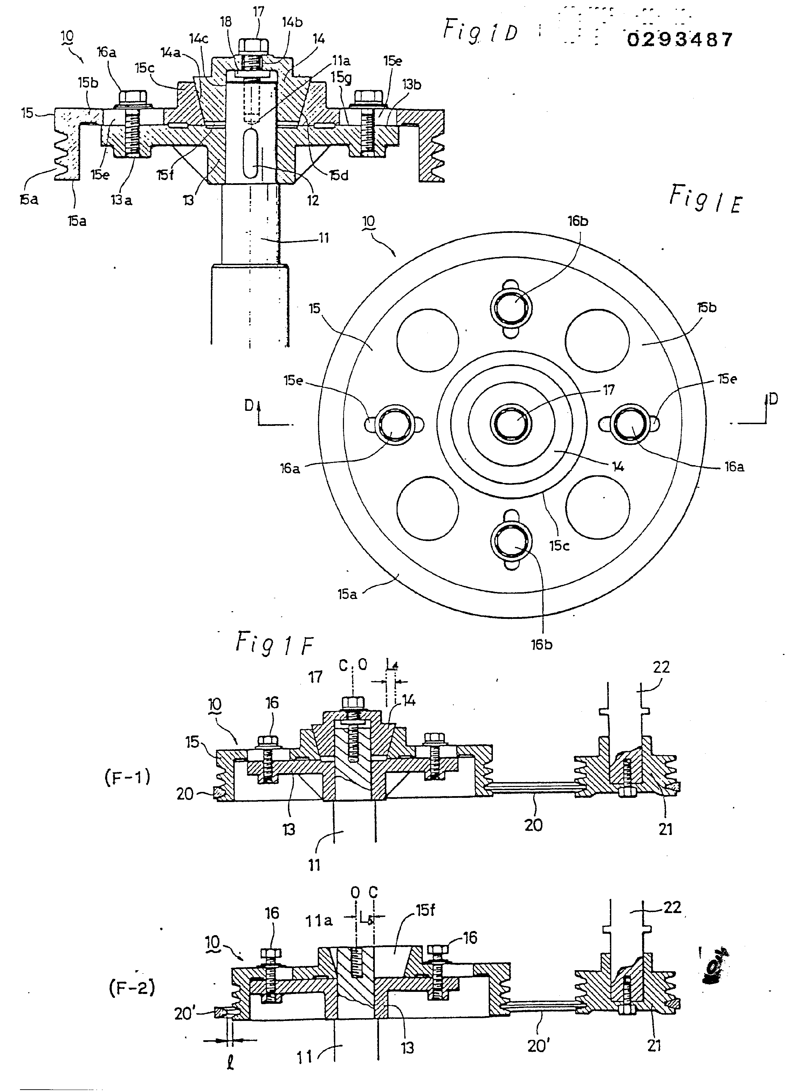

A first embodiment of the modularized belt transmission system of the invention is shown in Figures 1A, 1B and 1C. In these Figures, the belt transmission system of the invention comprises a single housing 30 of which a main body 30a is substantially elliptical in shape as seen in plan view (Figure 1B). On one side, for example, upper side of the main body 30a is mounted drive means such as an induction motor 25 by means of an input flange 26, and on opposite side is fixed an output flange 36 having a mounting collar 35. The transmission system shown in these Figures is adapted for a speed reducer unit and, hence, comprises, within the housing 30, an eccentrically shiftable pulley 10 of larger diameter secured to an output shaft 11 and a driving pulley 21 of smaller diameter secured to an input shaft 22 extending from the motor 25. (Details of pulley 10 are shown in Figures 1D through 1F.) A set of belts 20 is wrapped around the pulleys 10 and 21. Input flange 26 and output flange 36 are both securedly fixed to the housing 30 as unitary portions there of so that the distance between input shaft 22 and output shaft 11 is always kept constant and invariable. As a result, the housing 30 can be constructed in relatively compact size and the belt length can also be shortened. Above the shiftable pulley 10 in the housing 30 is formed a relatively wide access area 34 allowing serviceman to insert his hands therein for maintenance and/or repairing operations. A cap member 31 having substantially D-shape in plan view as seen in Figure 1C closes openably the access.area 34. The cap member 31 has an inverted conical shape in elevational view as noted from Figure 1A and is provided at its top with a vent 33 which is shielded by a protective cover 32 for preventing rain water and/or dust from entering into the housing.

As clearly seen in Figure 1B, relatively large spaces 34a and 34b are left in the access area 34 between the belts 20 and the inner surfaces of the housing body 30a, so that an operator willing replacement of the belts can insert his hands through these spaces into the underside of the pulley. Preferably, in order that the distance $L_1$ or $L_2$ between the upper surface of a pulley wheel 15 or the upper edge of the belt 20 and the inside surface of the upper portion of the housing body 30a be large enough to receive operator's hand, the input flange 26 is provided with an extension 27 having length $L_3$ to keep the upper surface of smaller pulley 21 spaced apart from the housing as clearly seen in Figure 1A.

As shown in Figures 1B and 1C, within the housing 30, a tension adjuster 40 is located at an intermediate position bet-

- 6 -

ween driving pulley 21 and driven pulley 10 to engage the belt
20 and is operable from outside of the housing. The tension adjuster 40 functions both to monitor and to regulate belt tension
from outside of the housing with the cap member 31 remained
closed. Detailed description will be made hereinafter in connection with Figure 1G.

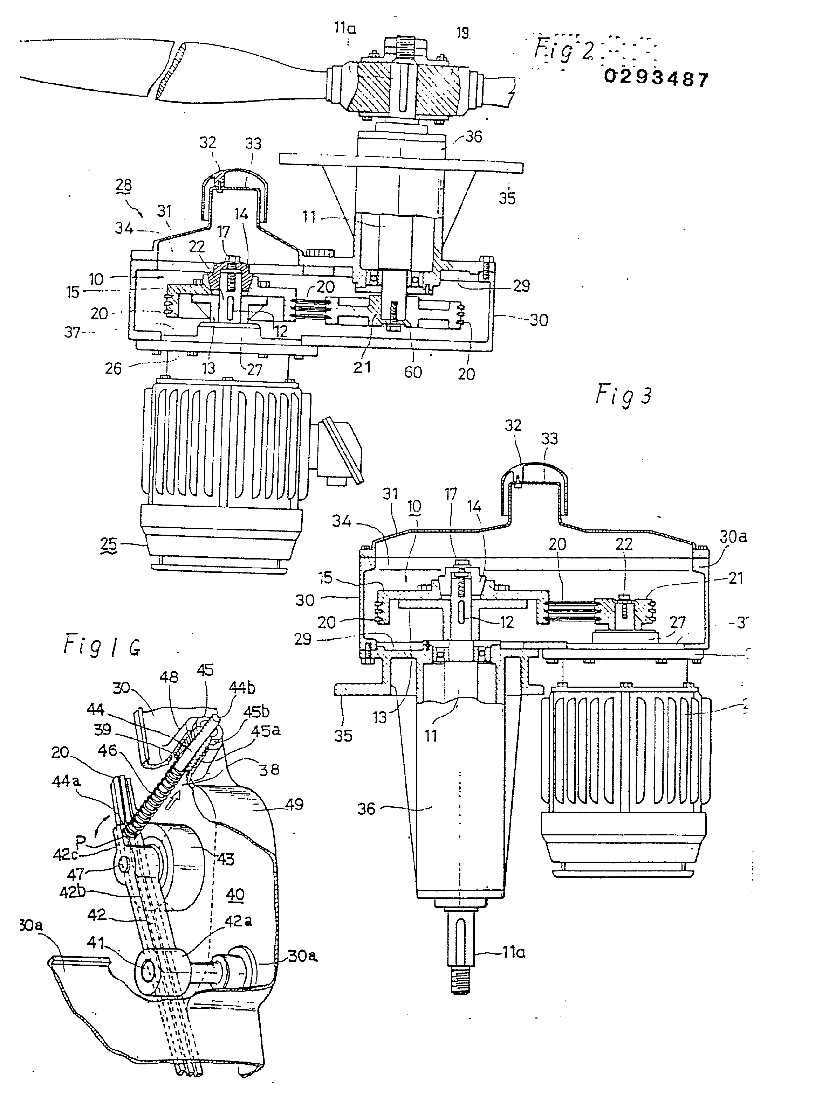

Eccentrically shiftable pulley 10 realizing the concept of
the modularized belt transmission unit contained in the unitary
housing according to the invention will be specifically described in connection with Figures 1D and 1E. The shiftable pulley
10 comprises basically a supporting disc 13 secured through keys
and grooves 12 to the rotatable shfaft 11, a tapered bushing
member 14 having an outer conical surface 14a, a bolt-receiving
top hole 14b, and an annular wheel plate 15 having belt-engaging
grooves 15a on its outer periphery, a flat annular portion 15b
to be slidingly supported on the disc 13, and a central hub 15c
for receiving the bushing member 14.

The supporting disc 13 is provided with a plurality of
tapped holes 13a arranged adjacent its peripheral edge on the
different diameters, and a flat upper portion 13b for slidably
guiding the wheel plate 15 thereon. The supporting disc 13 may
be made integral with the shaft 11 if desired.

A fastening bolt 17 is inserted through the hole 14b and
threaded into the bore 11a of the shaft 11. Abutting metal 18 is
compressed under the top portion of the bushing 14 for moving
the bushing member 14 upwardly when the bolt 17 is rotated.

The belt-engaging portion 15a has V-shaped grooves for receiving the belts 20. The flat annular portion 15b is provided
with a plurality of sets of slots 15e arranged in diametrically
opposed relation. The hub 15c has a central opening 15f of inverted frusto-conical shape. Bolts 16 are inserted through slots
15e aligned with tapped holes 13a in the disc 13 and fastened in
order to fix the wheel plate 15 to the disc 13. Four bolts 16
are employed in total as shown in Figure 1E corresponding to the
number of the slots 15e. The bolts 16 are to guide the sliding
wheel plate 15 in a prescribed direction and also to prevent the wheel plate 15 from falling off from the disc 13 when loosend thereon.

Figure 1D shows the wheel plate 15 held on the disc 13 in alignment with the axis of the shaft 11 during normal operational condition which corresponds to Figure 1F (F-1). In this condition, the bolts 16 are transmitting rotational forces incoming from the shaft 11 through the keys 12 to the disc 13 onto the wheel plate 15, whereas the bushing 14 functions chiefly as a positioning member holding the wheel plate 15 in alignment with the shaft 11 as compared to bushings heretofore used as clamping means which are to transmit rotational forces.

Next, referring to Figure 1F (F-1) and (F-2), the belt replacement procedures in the invention will be explained. Figure 1F (F-1) shows the normal operational condition as stated above in which a set of belts 20 is wrapped around driving pulley 21 fixed to rotating motor shaft 22 and driven pulley 10 eccentrically shiftable of the invention. The belt 22 is engaging with the pulley 10 in a tightened driving (or hard) connection therebetween in Figure 1F (F-1). From this state, bolt 17 is rotated to romove or move upwardly the bushing 14 from the wheel plate 15 in order to allow the belt to be replaced. Specifically, two of the four bolts 16, i.e., bolts 16b which are arranged in a row perpendicular to a line connecting the axes of the shafts 11 and 22 (see Figure 1E) are first removed, and then other two bolts 16a which are in a row parallel to the axes are partially loosened. Next, the bolt 17 is gradually loosened from bushing 14 to cause the wheel plate 15 to be urged and slidingly moved on the disc 13 under the influence of the yet tightened belt 20 towards the shaft 22. As a consequence, the center C of wheel 15 is eccentrically shifted from the axis 0 of the shaft 11. In this latter state, engagement of the belt 20 with the pulley 10 has been changed from the hard driving connection to a soft non-driving connection, whereupon, as the bushing 14 is removed completely from the central opening 15f, a clearance $\ell$ as shown in Figure 1F (F-2) is produced between the belt 20 and the wheel 15. By virtue of the clearance $\ell$, the belt or belts can easily be

replaced. Though V-belt is illustrated in these Figures, other type of belts such as ribbed belt or timing belt can be used in the same principle of the invention.

A fresh belt 20' as shown in Figure 1F (F-2) can be positioned tightenedly in an inverse order of procedures. That is, the wheel plate 15 is slidingly moved in the direction towards the axis 0 to align the center C therewith and engage the belt 20' with its groove 15a, and then the bushing 14 is again inserted into the opening 15f whereupon the bolt 17 is inserted and fastened into the shaft 11. Tightly fastening the bolt 17 causes the wheel 15 to be moved further so as to tighten the softly connected belt 20' allowing again the hard driving connection to be produced between the belt and the pulley, and the center C of the wheel 15 to be precisely aligned with the axis 0 of the shaft 11. Thereafter, four bolts 16a and 16b are fastened to complete the belt replacement operation.

The bushing 14 above described and illustrated has tapered surface 14a. Depth of tapering $L_4$ shown in Figure 1F (F-1) will regulate tightness between the belt and the pulley, and an amount of shifing or eccentricity $L_5$ (F-2) will determine the size of clearance $\ell$ between the belt and the loosened pulley.

Last in the first embodiment, Figure 1G shows the details of tension adjuster mechanism 40 shematically illustrated in Figure 1B. On the bottom surface of housing body 30a is secured an upright post 41 on which an arm 42 is pivotally supported having a bearing portion 42a and an arm portion 42b. At the other end of arm 42 is pivotally supported a tension roller 43 by means of a pivot shaft 47, and at an extension 42c of the arm is formed a pivoting point P to which an end of a guiding rod 44 is engaged. A stopper 44a is attached to the rod adjacent to the point P. A nipple 45 is mounted by means of its threaded portion 45a on a protrusion 48 of housing body 30a. Between stopper 44a and the inner end of threaded portion 45a is disposed a spring 46. The threaded portion 45a of the nipple 45 extends out from the protrusion 48 as an exposed end 45b by which belt tension can be adjusted from outside of the housing. The rod 44 passes

- 9 -

through a tapered bore 39 formed in the inner portion of the nipple 45 and its outer end 44b protruding from the exposed end 45b has scale indicating lengths of the rod 44 protruding relative to the exposed end 45b by which belt tension can be visually noted from outside of the housing. The protrusion 48 has an inside diameter larger than the rod 44 and the spring 46 so that, when the nipple 45 is removed therefrom, the rod 44 and spring 46 can be pulled out from the housing. Then, tension roller 43 through pivotal movement of the arm 42 can be separated from the belt 20 and accommodated into a bay 49 preparatorily for speedy belt replacement. A waterproofing cover 50 (Figure 1B) may be attached to the adjuster 40 by means of threaded surface 45a of the nipple 45.

## Second Embodiment

Figure 2 shows a second embodiment of the invention in partially broken away elevational view. The same reference characters are assigned to the same parts as in the first embodiment to eliminate repeated explanations.

In this embodiment, eccentrically shiftable pulley 10 is employed on the input side of the belt transmission unit 28 and a larger diameter pulley 60 is fixed to output shaft 11. That is, the pulley 10 comprising support disc 13 and wheel plate 15 slidable thereon is shftably connected to input rotating shaft 22 of the motor 25. A set of belts 20 are wrapped around the pulleys 10 and 60. Housing 30 has a first opening 37 through which the pulley 10 is inserted into the housing and then motor 25 is fixedly mounted on the housing. On opposite side, the housing has a third opening 34 formed side by side with a second opening 29 for output flange 36. The second embodiment functions in substantially the same manner as the first embodiment except that the shiftable pulley 10 is employed on the input side and is smaller in diameter than the output pulley 60.

## Third Embodiment

Figure 3 shows a third embodiment of the modularized belt transmission unit of the invention in which both first opening 37 for mounting driving motor 25 and second opening 29 for output flange 36 are formed side by side on the same side of the housing 30, and third opening 34 is formed in the almost entire area of the opposite side of the housing. Wide third opening 34 is closable with a lightweight lid 31 of aluminum die casting.

In this embodiment, belt replacement can more easily be done as the upper opening 34 is wider than in the previous embodiments. Thus, the third embodiment is effectively applicable to some betls hard to be dealt such as thiming belt. Substantially the same function and advantages are obtained in the third embodiment as in the first embodiment.

In all the embodiments mentioned above, input rotating shaft 22 is directly connected to drive means such as electric motor 25, but it may be indirectly connected to drive means as through the reduction gear. Also, although output shaft 11 is connected to a fan blade 19 in Figure 2, it may be connected to various driven members such as low speed agitator as through the reduction gear, particularly planetary reduction gear.

### Fourth Embodiment

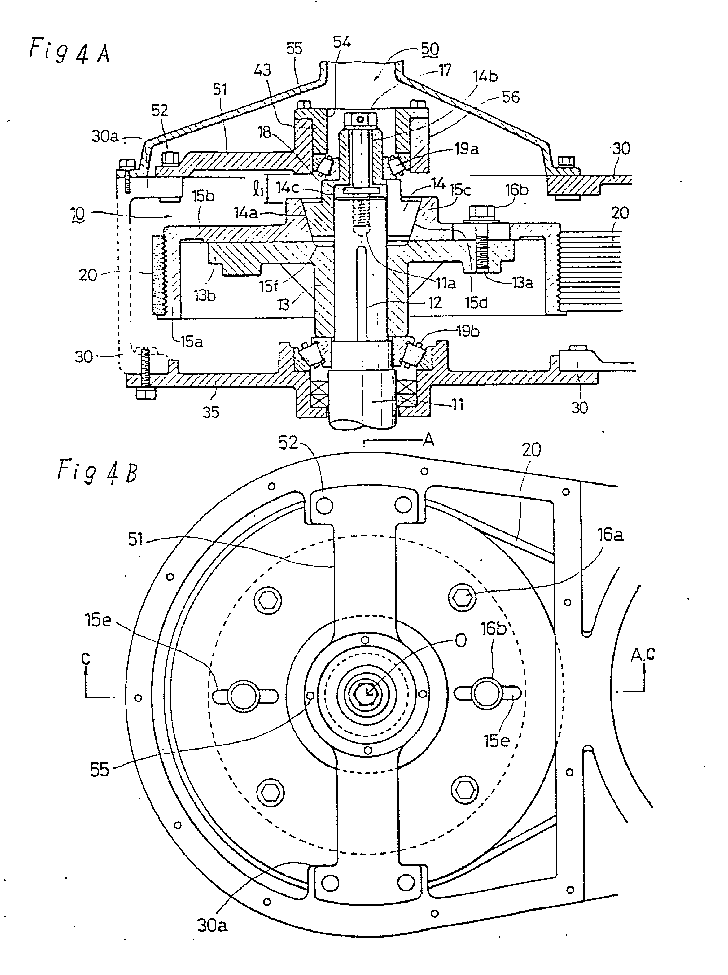

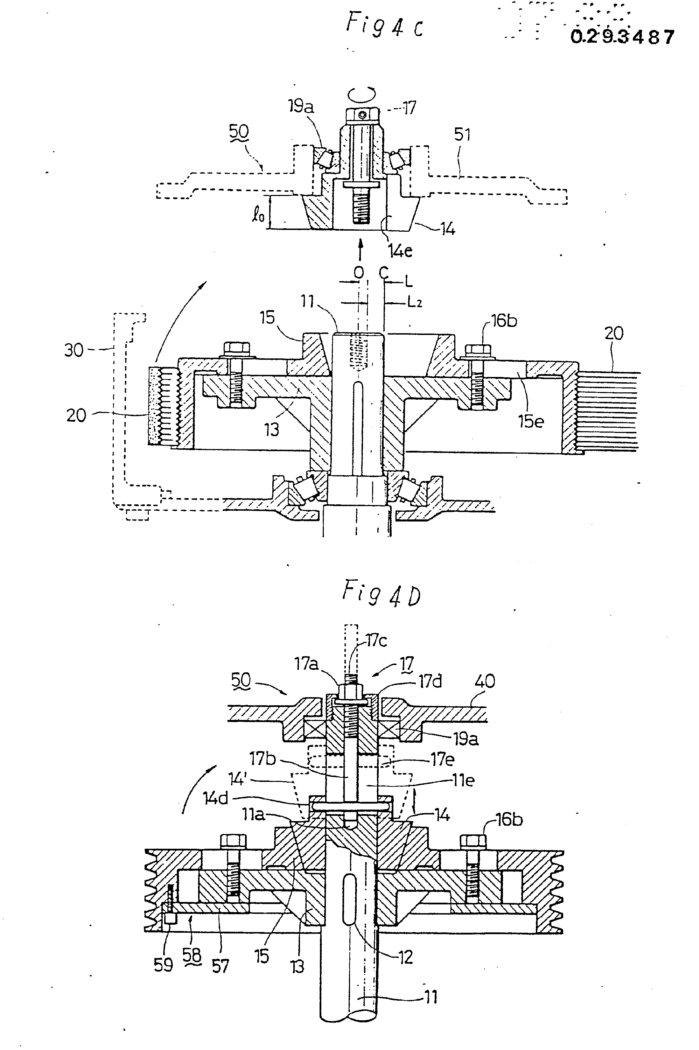

Figure 4A, 4B and 4C represent another embodiment of the invention in which the eccentrically shiftable pulley 10 is juournalled at its both ends, respectively in partial sectional view, in plan view and in exploded view explaining procedures for belt replacement, and Figure 4D shows a modified form of the shiftable pulley supported in a different manner. In these Figures, the same reference characters are assigned to the same or similar parts as in the first embodiment.

The belt transmission systems in these embodiments are particularly suited for the systems which may be subjected to vibrations in the thrust direction since the pulley 10 or the shaft supporting the same is journalled at its both ends. In Figures 4A, 4B and 4C, a bearing assmebly 19a is mounted on an outer periphery of an extended portion of bushing 14 fitted onto the upper end of the shaft 11, and a support structure 50 is provided bridgewise over the upper opening of the housing. The support structure 50 comprises a pair of arms 51 secured at the outer end to an upper fringe 30a of the housing 30 and a central cylindrical portion 56 formed on the inner ends of the arms. A support socket 43 is fitted within an opening 54 of the central cylinder 56. The upper extended portion of bushing 14 is positioned within the opening 54 and is formed with a bolt-receiving hole 14b. Following removal of socket 43 from the opening 54, bushing 14 can be taken off from the wheel plate 15 by unscrewing the bolt 17. In this connection, the distance $\ell_1$ between the undersurace of the cylinder 56 and the upper end of the hub 15c of the plate 15 indicated in Figure 4A should be set larger than the height $\ell_0$ (see Figure 4C) of tapered portion of bushing 14.

For belt replacement, bolts 52 are removed and the arms 51 are rotated around the axis 0 to permit the belt 20 ( a ribbed belt in this instance) to pass through the clearance formed between the outer ends of the arms and the inside surface of the housing. Or, the arms 51 may be separated upwards from the housing as illustrated in Figure 4C. Alternatively, the distance $\ell_1$ can be set far larger such that a clearnce enough to pass the belt 20 therethrough may be formed between the bottom end of then lifted bushing 14 and the top ends of the shaft 11 and the hub 15c. In the latter case, support arms 51 may be made integral with the housing 30 without bolts 52.

Figure 4D shows a modified form of double-journalled structure wherein the shaft 11 is provided at its upper portion with a longitudinal slot 11e through which a guide rod 17b is inserted into the shaft 11 and connected with a cross rod 14d of the bushing 14 so as to enable handling the bushing 14 from outside of the support structure 50. Rotating the nut 17a clockwise causes the bushing 14 to be moved upwardly as illustrated in broken lines, and then support arms 40 may be detached from the bearing assembly 19a to enable replacing of the belt. As an additional feature in this embodiment, means 58 for preventing the disc 15 from falling off from the supporting disc 13 is provided and comprises a guide plate 57 disposed on the underside of the pulley 10 and attached to the inner periphery of the wheel 15. This assures that the pulley can be utilized in an inverted position without falling off from the disc 13.

## Other Embodiments

In the above-mentioned embodiments, the input and output shafts are all disposed vertically. However, according to the invention, the unitized housing can be constructed such that the shafts are arranged horizontally. Figure 5 shows an example of vertical type housing 30 in which two shafts 11, 22 are horizontally arranged in upper and lower positions respectively. This type of belt transmission unit is based upon the same inventive concept as the type already shown in Figure 3. In the example shown, the eccentrically shiftable pulley having the bushing 14 is mounted on the upper shaft 11. When the bushing 14 is released, the wheel plate 15 slides down by gravity to effectuate very easy replacing of the belt. The input shaft and output shaft may be extended on the different sides from each other of vertical housing 30 as is the case of first and second embodiments.

Figure 6 shows also horizontal disposition of the shafts 11 and 22 which, in this case, are housed in a lateral type housing 30.

Although the primary concern in the above descriptions lies in the speed reducer, the modularized belt transmission system having the shiftable pulley housed therein of the invention is equally applicable to speed-increasing transmissions.

Further, the present invention is also advantageously applicable to high power transmissions utilizing scram betls amd timing belts or the like which heretofore have rendered belt replacement operations very cumbersome and difficult due to their increased thicknesses. According to the invention, the modularized transmission system can be constructed as having therein both input and output shafts provided with eccentrically shiftable pulleys whereby belt replacement oprations will be performed very easily with minimum labor and time consumed.

## Industrial Applicability

According to the invention, replacement of the belt in the transmission system can be effected without need for shifting any of input and output shafts by virtue of pulleys shiftable eccentrically in lateral directions with respect to the shafts in the system. The fact that there is no need for shifting any of input and output shafts leads to the realization of the modularized belt transmission system which totally contains transmission parts in the single housing of compact size, which heretofore have been considered unattainable for the belt transmission. Thus, the present invention can shange completely the previous concepts for the belt transmission and provides for means enabling the production of modularized or unitized belt transmission unit just like the gear transmission unit heretofore employed.

Moreover, the modularized belt transmission is superior to the gear transmission in that the former has high ability of absorbing vibrations and low noise characteristic and is lower cost. Modularization of the transmission system allows standardization, unified production control and efficient mass-production of several parts thereby to achieve high industrial availability.

In particular, the transmission unit of the invention has a structural feature such that both drive means and the load are directly mounted on and supported by the single compact housing, so that there is no need for expedient measures for the belt replacement heretofore individually and separately contrived case by case correspondingly to particular types of the load, and moreover, spaces for transmission system installed can be smaller than heretofore required. These are innegligible industrial benefits.

Modularized transmission unit of the invention enables also high sealing property to be attained so that, even under severe conditions including raindrops, dust, sand and so on, the belt can retain high coefficient of friction or transmission efficiency for a long period of time. Thus, a compact and yet reliably stable belt transmission system for outdoor use can be realized.

Furthermore, the modularized compact transmisssion system

- 14 -

of the invention allows the distance between the shafts and the length of the belt used to be shortened. The shorter the belt is, the less is an amount of elongation. If a slight elongation is produced, it can be effectively absorbed by the tension adjuster provided in the housing.

Thus, there is provided the transmission system utilizing the belt and yet requiring no maintenance services and/or inspection as to belt tension for a long period of time thereby to effect economical merits.

In addition, considering the fact that various durable belts capable of transmitting even higher power with higher efficiency as compared to the gear transmission have been developed recently, the invention can afford a new type of modularized belt transmission of heavy-duty, low noise and high impact-absorbing property at innexpensive costs and provides for revolutionary advantages in many industrial fields.

C L A I M S

1.  A belt transmission system in which belt means is wrapped
    around a pair of pulleys mounted respectively on the input and
    output shafts, characterized in that at least one of said
    pulleys is constructed as an eccentrically shiftable pulley
    comprising a slidable wheel plate, the rotational center of
    which is in alignment with the axis of said shaft supporting
    said pulley in normal operational conditions, and is eccentrically shiftable from said axis for belt replacement operation,
    and in that said pair of pulleys and the input and output
    shafts are unitarily contained in a single housing comprising
    a main body and a cover member, said input and output shafts
    with the distance therebetween set invariably being fixedly
    journalled by said housing.

2.  The belt transmission system as claimed in Claim 1 wherein
    said shiftable pulley comprises a bushing member holding said
    wheel plate in alignment with said axis of said shaft in said
    normal operational conditions, and a supporting disc supporting said wheel plate between itself and said bushing member
    and slidably guiding said wheel plate thereon, said disc being
    mounted on said supporting shaft.

3.  The belt transmission system as claimed in Claim 2 wherein,
    while said belt remains wrapped around said pulleys, said
    bushing member is able to be remeved from or fitted within
    said wheel plate such that removal of said bushing member from
    said wheel plate causes eccentrically shifting of said busing
    member to occur and fitting of said bushing member into said
    wheel plate causes alignment between the center of said wheel
    plate and the axis of said shaft to be attained.

4.  The belt transmission system as claimed in Claim 3 wherein
    each of said input and output shafts is fixedly secured
    through a mounting flange to said housing in a cantilever
    fashion and has said pulley mounted on its free end in the
    housing.

5.   The belt transmission system as claimed in Claim 3 wherein
at least one of said input and output shafts is journalled at
both sides of the pulley mounted thereon.

6,   The belt transmission system as claimed in Claim 4 or 5
wherein said housing is of verical type in which said input
and output shafts are arranged horizontally, one being in an
upper position, and the other in a lower position.

7.   The belt transmission system as claimed in Claim 4 or 5
wherein said housing is of lateral type in which said input
and output shafts are both arranged horizontally or vertically.

8.   The belt transmission system as claimed in Claim 6 or 7
wherein said housing body has an input opening and an output
opening respectively for receiving pulleys to be mounted on
said input and output shafts, and further has an access opening for removing and fitting said bushing member from and into
said wheel plate and closable with said cover member in normal
conditions.

9.   The belt transmission system as claimed in Claim 8 wherein
said housing body has said input and output openings on the
same side thereof, and said access opening on the opposite
side thereof.

10.   The belt transmission system as claimed in Claim 8 wherein
housing body has said input and output openings on the different sides thereof, and said access opening adjacent to any
one of said input or output openings.

11.   The belt transmission system as claimed in Claim 10 wherein
said access opening forms spaces left enough to pass operator'
s hands between the inside surfaces of said housing and the
belt wrapped around the pulleys, and further a prescribed distance is formed between the inside surface of said housing and
peripheral portions of said wheel plate of said shiftable
pulley.

12.   The belt transmission system as claimed in Claim 11 wherein said housing body has a flange attached to each of said input and output openigns, said flanges being defined with two parallel end surfaces.

13. The belt transmission system as claimed in Claim 10 wherein said housing body has a tension adjuster disposed in a space defined between said housing body and said belt.

14. The belt transmission system as claimed in Claim 13 wherein tension adjuster comprises a tension roller pivotally supported on an arm rotatable around an upright post secured in said housing, a spring means urging said arm towards said belts, and adjustable pressure means.

15. The belt transmission system as claimed in Claim 14 wherein said housing is made in a semi-sealed state, and said cover member is provided with a vent.

16. The belt transmission system as claimed in Claim 15 wherein said adjustable pressure means is extended through a protrusion of said housing body to the outside so as to be operable from outside of said housing.

17. The belt transmission system as claimed in Claim 16 wherein said adjustable pressure means comprises a nipple abutting at its inner end said spring, and an indicating rod inserted through said nipple and said spring, an end of said rod engaging pivottaly to said arm, and the other end of said rod protruding from said nipple to indicate the tension of the belt.

18. The belt transmission system as claimed in Claim 17 wherein said housing body has a bay portion formed convexly on its side for accommodating said tension roller for belt replacement operation when said adjustable pressure means is removed through said protrusion towards ouside of said housing.

19. The belt transmission system as claimed in Claim 5 wherein a support structure is provided bridgewise over said access opening, and said shaft supporting said shiftable pulley is juournalled by said structure at its end adjacent to said

- 18 -

bushing member.

20.  The belt transmission system as claimed in Claim 19 wherein said support structure is removably secured to the periphery -of said access opening by means of bolts.

21.  The belt transmission system as claimed in Claim 20 wherein said support structure supports said bushing member by means of a bearing assembly fitted around said bushing member, and, when said bushing member is separated from said wheel plate, a clearance is formed between the end of said shaft supporting the shiftable pulley and the end of said separated bushing member sufficient to pass the belt therebetween.

Fig 1A

Fig 1B

Fig 1C

Fig 1D

0293487

Fig 1E

Fig 1F

(F-1)

(F-2)

Fig 2

0293487

Fig 3

Fig 1 G

0293487

**Fig 4 A**

**Fig 4 B**

**Fig 4 c**

0.293487

**Fig 4 D**

0293487

Fig 5

Fig 6

Fig 7A

Fig 7C

Fig 7B

0293487

# INTERNATIONAL SEARCH REPORT

International Application No  PCT/JP87/00912

## I. CLASSIFICATION OF SUBJECT MATTER (if several classification symbols apply, indicate all) 3

According to International Patent Classification (IPC) or to both National Classification and IPC

Int.Cl⁴     F16H55/36, 7/24, 57/02, F16D1/06

## II. FIELDS SEARCHED

Minimum Documentation Searched 4

| Classification System | Classification Symbols |
|---|---|
| IPC | F16H55/36-55/50, 7/24, 57/02 <br> F16D1/06 |

Documentation Searched other than Minimum Documentation
to the Extent that such Documents are Included in the Fields Searched 5

| | |
|---|---|
| Jitsuyo Shinan Koho | 1920 - 1987 |
| Kokai Jitsuyo Shinan Koho | 1971 - 1987 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | JP, Y1, 48-43330 (Toyoda Machine Works, Ltd.) <br> 14 December 1973 (14. 12. 73) <br> Figs. 1 to 4 (Family: none) | 1, 4-7 |
| X | JP, Y2, 61-26672 (Honda Motor Co., Ltd.) <br> 9 August 1986 (09. 08. 86) <br> Figs. 2 to 5 (Family: none) | 1 |
| Y | JP, U, 52-124375 (Shimadzu Corporation) <br> 21 September 1977 (21. 09. 77) <br> Figs. 1 to 3 (Family: none) | 2, 3 |
| Y | JP, Y2, 51-27414 (Iseki & Co., Ltd.) <br> 12 July 1976 (12. 07. 76) <br> Figs. 1 to 3 (Family: none) | 2, 3 |

* Special categories of cited documents: 16

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| February 14, 1988 (14. 02. 88) | February 15, 1988 (15. 02. 88) |
| International Searching Authority 1 | Signature of Authorized Officer 20 |
| Japanese Patent Office | |

Form PCT/ISA/210 (second sheet) (October 1977)